(19) **Europäisches Patentamt**

**European Patent Office**

**Office européen des brevets**

(11) **EP 0 979 672 A1**

(12) **EUROPÄISCHE PATENTANMELDUNG**

(43) Veröffentlichungstag:
16.02.2000 Patentblatt 2000/07

(51) Int. Cl.$^7$: **B01D 69/12**, B01D 67/00

(21) Anmeldenummer: 99115473.3

(22) Anmeldetag: 05.08.1999

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **12.08.1998 DE 19836418**

(71) Anmelder:
**Metallgesellschaft Aktiengesellschaft
60325 Frankfurt am Main (DE)**

(72) Erfinder:
**Heinzelmann, Willy, Dr.
6430 schwyz (CH)**

(54) **Membran zur Trennung von Stoffgemischen und Verfahren zu ihrer Herstellung**

(57) Es wird eine Membran zur Trennung von Stoffgemischen durch Pertraktion, Pervaporation sowie Permeation kondensierbarer Gase oder Dämpfe beschrieben, die eine aktive Trennschicht aufweist und die als Komposit-Membran oder als integral-asymmetrische Membran gestaltet ist. Bei dieser Membran ist auf der dünnen, aktiven und mit Fehlstellen behafteten Trennschicht eine homogene Schutzschicht angeordnet , die einen Durchmesser von 0,01 bis 1 µm hat, deren chemische Zusammensetzung von der chemischen Zusammensetzung der Trennschicht verschieden ist, die aus einem löslichen Polymer, Copolymer oder Polymergemisch besteht, deren spezifischer Permeatfluß mindestens um das 2-fache höher ist als der spezifische Permeatfluß der Trennschicht und deren Selektivität mindestens um das 2-fache kleiner ist als die Selektivität der Trennschicht.
Ferner wird ein Verfahren zur Herstellung dieser Membran beschrieben.

EP 0 979 672 A1

**Beschreibung**

Die Erfindung betrifft eine Membran zur Trennung von Stoffgemischen durch Pertraktion, Pervaporation, Permeation kondensierbarer Gase oder Dampfpermeation, die eine aktive Trennschicht aufweist, die als Komposit-Membran oder als integral-asymmetrische Membran gestaltet ist und die auf der dünnen, mit einer hohen Zahl von Fehlstellen behafteten Trennschicht eine homogene Schutzschicht trägt, welche einen Durchmesser von 0,01 bis 1 µm hat und aus einem löslichen Polymer, Copolymer oder Polymergemisch besteht. Die Erfindung betrifft ferner ein Verfahren zur Herstellung dieser Membran.

Es ist bekannt, daß flüssige, gasförmige und dampfförmige Stoffgemische durch Membranen getrennt werden können. Bei der Pertraktion wird ein flüssiges Stoffgemisch auf eine Membran geführt, wobei ein Stoff des Gemisches von der Membran zurückgehalten wird, während ein zweiter Stoff des Gemisches durch die Membran hindurchtritt. Der Stoff, der die Membran passiert, wird von einer flüssigen Phase aufgenommen und abgeführt, welche an der Rückseite der Membran fließt. Bei der Pervaporation wird ein flüssiges Stoffgemisch einer Membran aufgegeben, wobei ein Stoff des Gemisches von der Membran zurückgehalten wird, während ein zweiter Stoff des Gemisches durch die Membran hindurchtritt und durch die Wirkung eines Vakuums verdampft sowie von der Rückseite der Membran abgeführt wird. Bei der Trennung von Dämpfen oder kondensierbaren Gasen mittels Dampf- oder Gaspermeation wird ein gasförmiges Stoffgemisch einer Membran aufgegeben, wobei ein Stoff des Gemisches von der Membran zurückgehalten wird, während ein zweiter Stoff des Gemisches durch die Membran hindurchtritt, durch die Wirkung eines Vakuums von der Rückseite der Membran abgeführt und anschließend kondensiert wird. Die Pertraktion, die Pervaporation, die Permeation kondensierbarer Gase und die Dampfpermeation besitzen ein gemeinsames Merkmal, das darin besteht, daß die Triebkraft dieser Trennprozesse auf einem insbesondere von der Konzentrationsdifferenz des abgetrennten Stoffes abhängigen Aktivitätsgradienten beruht, der an bzw. in der Membran vorliegt und der bei der Pertraktion durch die an der Rückseite fließende und dauernd erneuerte flüssige Phase sowie bei der Pervaporation und der Permeation kondensierbarer Gase oder Dämpfe durch das Vakuum oder in einer selteneren Ausführungsform durch einen Inertgasstrom erzeugt bzw. aufrechterhalten wird, wobei der Membran die zu trennenden flüssigen, gasförmigen oder dampfförmigen Stoffgemische bei Normaldruck oder nur leicht erhöhtem Druck aufgegeben werden.

Die Trennung der flüssigen und gasförmigen Stoffgemische durch Pertraktion, Pervaporation, Permeation kondensierbarer Gase und Dampfpermeation erfolgt an einer aktiven Trennschicht, die von einem Polymer gebildet wird, die relativ dünn ist und beispielsweise in bewährten Ausführungsformen eine Dicke (einen Durchmesser) von 0,5 bis 2 µm aufweist, die bezüglich ihrer chemischen Zusammensetzung homogen ist und die bezüglich ihrer Struktur ebenfalls als homogen bzw. dicht angesehen wird, obwohl sie Poren mit einem Durchmesser von bis zu 2 nm aufweisen kann. Diese Trennschicht ist für die Leistung des Trennverfahrens verantwortlich, welche durch den Permeatfluß und die Selektivität gekennzeichnet ist. Der Permeatfluß gibt die Menge des durch die Membran hindurchtretenden Stoffes an (kg/m$^2$h). Die Selektivität $\alpha$ ist ein Maß für die Qualität des Trennverfahrens und definiert mithin die Reinheit des Permeats.

$$\alpha = \frac{CAP \ / \ CBP}{CAZ \ / \ CBZ}$$

C = Konzentration;
A, B = Stoffe A und B;
P = Permeat; Z = Zulauf

Der Permeatfluß ist eine von der Schichtdicke abhängige Größe, denn in erster Näherung ist der Permeatfluß umgekehrt proportional zur Schichtdicke. Um den Permeatfluß verschiedener Membranen vergleichen zu können, muß er jeweils auf eine bestimmte Schichtdicke bezogen werden, z.B. auf eine Schichtdicke von 1 µm. Der auf eine bestimmte Schichtdicke bezogene Permeatfluß wird als spezifischer Permeatfluß bezeichnet. Im Gegensatz zum Permeatfluß ist die Selektivität in erster Näherung eine von der Schichtdicke weitgehend unabhängige Größe.

Bei der Durchführung der Pertraktion, Pervaporation, Permeation kondensierbarer Gase und der Dampfpermeation im technischen Maßstab sind also in jedem Fall ein hoher Permeatfluß und eine ausreichend hohe Selektivität anzustreben. Die bei den vorgenannten Trennprozessen an der aktiven Trennschicht ablaufenden Vorgänge lassen sich am besten durch das sogenannte Lösungs-Diffusions-Modell beschreiben und erklären.

Da der Permeatfluß mit zunehmender Dicke der aktiven Trennschicht abnimmt, sollten die Trennschichten möglichst dünn sein. Sehr dünne Trennschichten haben aber insbesondere dann, wenn sie im technischen Maßstab eingesetzt werden, eine zu geringe mechanische Stabilität. Daher ist es üblich, daß die dünne, aktive Trennschicht auf eine poröse Stützschicht aufgebracht wird, die der Membran mechanische Stabilität verleiht. Die aus der aktiven Trennschicht und mindestens einer porösen Stützschicht bestehende Membran kann entweder als Komposit-Membran oder als integral-asymmetrische Membran gestaltet werden, wobei es möglich und üblich ist, beide Membrantypen zusätzlich auf einem sehr durchlässigen Trägermaterial (Gewebe, Vlies) anzuordnen. Bei der Herstellung einer Komposit-Membran wird die dichte, aktive Trennschicht als separate Schicht auf eine poröse Stützschicht aufgebracht, wobei diese Stützschicht wiederum aus mehreren einzelnen porösen Schichten bestehen kann und wobei die Trennschicht und die Stützschicht miteinander so fest verbunden werden müssen, daß sie sich während des Betriebs nicht voneinander lösen. Bei der Herstellung einer integral-asymmetrischen Membran wird eine aus einem Polymer oder einem Copolymer oder einer Polymermischung bestehende poröse Membran so hergestellt oder nachträglich modifiziert, daß sich an der einen Seite der Membran eine dünne, homogene, aktive Trennschicht bildet. Die integral-asymmetrische Membran ist hinsichtlich ihrer chemischen Grundzusammensetzung gleichartig (integral) und hinsichtlich ihrer Porenstruktur unterschiedlich (asymmetrisch) . Während die Dicke der Trennschicht einer Komposit-Membran relativ einfach und mit einem relativ eindeutigen Ergebnis gemessen werden kann, ist dies bei einer integral-asymmetrischen Membran problematisch, da die Trennschicht der integral-asymmetrischen Membran innerhalb eines Grenzbereichs fließend in die poröse Stützschicht übergeht, während die Trennschicht und die Stützschicht der Komposit-Membran eine relativ gut ausgebildete Grenzlinie bilden.

Einen Überblick über das Gebiet der Membrantechnik gibt die Veröffentlichung von E. Staude, Membranen und Membranprozesse, VCH Verlagsgesellschaft mbH, Weinheim, DE, 1992, und sowohl Komposit-Membranen als auch integral-asymmetrische Membranen sind an sich bekannt.

Die DE-A 32 20 570 offenbart eine Komposit-Membran mit einer porenfreien Trennschicht aus einem ersten Polymer und einer porösen Stützschicht aus einem zweiten Polymer, wobei die Trennschicht aus Polyvinylalkohol oder Celluloseacetat besteht. Die poröse Stützschicht ist wiederum auf ein als Trägerschicht wirkendes Vlies oder gewebtes Tuch aufgebracht. Die poröse Stützschicht besteht aus Polyacrylnitril oder Polysulfon. Das Polymer der Trennschicht soll nicht in die Poren der Stützschicht eindringen. Die Trennschicht der bekannten Komposit-Membran muß porenfrei sowie fehlstellenfrei sein, und die Schichtdicke der Trennschicht beträgt im allgemeinen 0,05 bis 10 μm, vorzugsweise 0,1 bis 5 μm, wobei sich Schichtdicken von ca. 1 bis 2 μm in der Praxis als besonders geeignet erwiesen haben. Die Dicke der porösen Stützschicht beträgt vorzugsweise 20 bis 100 μm. Die als Vlies oder Gewebe gestaltete Trägerschicht der bekannten Komposit-Membran hat lediglich die Aufgabe, die mechanische Stabilität der Komposit-Membran zu erhöhen. Die aus der DE-OS 32 20 570 bekannte Komposit-Membran wird für die Trennung von Flüssigkeitsgemischen nach dem Verfahren der Pertraktion oder der Pervaporation verwendet.

Aus der EP-B 0 559 902 ist eine integral-asymmetrische Membran bekannt, die aus mindestens einem Polyacrylnitril-Copolymer besteht, welches 90 bis 97 Mol-% Acrylnitril-Monomer-Einheiten enthält. Die bekannte Membran hat eine Dicke von 5 bis 30 μm, und die äußere, aktive Trennschicht der Membran hat eine Dicke von 0,05 bis 5 μm. Die bekannte Membran wird zur Trennung von Stoffgemischen durch Pervaporation, Dampfpermeation oder Pertraktion verwendet. Die Herstellung der bekannten integral-asymmetrischen Membran erfolgt in der Weise, daß zunächst eine Lösung des Copolymers hergestellt wird, daß diese Lösung anschließend auf einen Träger aufgebracht wird, daß die Membran danach durch Coagulieren ausgefällt wird und daß die Membran schließlich in einer Wasserdampf-Atmosphäre oberhalt 90°C oder in einer trockenen Atmosphäre oberhalb der Glasübergangstemperatur des Copolymers behandelt wird.

Es hat sich gezeigt, daß es mit den bekannten Methoden zur Herstellung von Komposit-Membranen und integral-asymmetrischen Membranen, die zur Stofftrennung durch Pertraktion, Pervaporation, Permeation kondensierbarer Gase und Dampfpermeation verwendet werden, technisch sehr schwierig ist, eine aktive Trennschicht zu erzeugen, die sowohl sehr dünn als auch frei von Fehlstellen ist. Fehlstellen sind kleine Lecks in der Trennschicht, durch die das flüssige oder gasförmige Stoffgemisch unverändert permeiert. Durch die Fehlstellen wird also insbesondere die Selektivität der Membran nachteilig beeinflußt; der von der Membran aus dem Stoffgemisch abgetrennte, reine Stoff (Permeat) wird also durch den zweiten Stoff des Stoffgemisches verunreinigt, da das Stoffgemisch durch die Fehlstellen der Trennschicht unverändert in das Permeat gelangt. Durch die Fehlstellen können aber auch Verunreinigungen, die im Stoffgemisch enthalten sind, in die Membran eindringen und sich dort während des Betriebs anreichern, was zur Veränderung der Leistungsdaten der Membran oder zur Zerstörung der Membran führen kann. Der negative Einfluß der Fehlstellen kann zwar dadurch zurückgedrängt werden, daß die Dicke der Trennschicht erhöht wird und/oder daß die Trennschicht in mehreren Arbeitsgängen erzeugt wird. Allerdings bewirken diese Maßnahmen in nachteiliger Weise eine Verminderung des Permeatflusses bzw. eine Erhöhung der Herstellkosten. Es ist natürlich möglich, zur Herstellung dicker Trennschichten spezielle Polymere mit hohem Permeatfluß zu verwenden. Allerdings quellen derartige Trennschichten bei einer höheren Konzentration an permeierender Substanz stark auf, wodurch sie gegenüber mechanischer Beschädigung empfindlich werden und bei direktem Kontakt mit anderen Materialien zum Verkleben neigen. Der nachteilige Einfluß der Quellung kann zwar durch chemische oder thermische Vernetzung des Polymers der Trennschicht zurückgedrängt werden, doch reduziert die Vernetzung wiederum in nachteiliger Weise den Permeatfluß.

In der Vergangenheit hat es nicht an Versuchen gefehlt, die Trennleistung einer Membran durch das Aufbringen einer dünnen Schutzschicht auf die mit Fehlstellen behaftete Trennschicht zu verbessern.

Aus der EP-A 0 719 581 ist eine mehrschichtige Membran für die Trennung von Gasgemischen bekannt, die aus einem Hohlfaser-Substrat, einer Gastrennschicht aus Polyamid, Polyester, Polycarbonat, Cellulose, Polysulfon oder Polyphenylenoxid und einer Schutzschicht mit hoher Gasdurchlässigkeit aus Polysiloxan oder perfluorierten Kohlenwasserstoffen besteht, wobei die Schutzschicht einen Durchmesser < 0,2 μm hat.

Aus der US-A 3 980 456 ist ein Verfahren zum Abdichten von Brüchen in einer aus einer Vielzahl von Schichten bestehenden, ultradünnen Verbundmembran bekannt. Die Verbundmembran wird zur Gastrennung verwendet. Das bekannte Verfahren arbeitet in der Weise, daß auf ein glattes, mikroporöses Substrat eine ultradünne Gastrennschicht aufgebracht wird, daß durch Gießen ein dichter ultradünner Film aus einem Abdichtungsmaterial hoher Flexibilität hergestellt wird und daß dieser Abdichtungsfilm auf die Verbundmembran aufgebracht wird, wobei das Abdichtungsmaterial gegenüber dem abzutrennenden Gas eine hohe Durchlässigkeit und eine geringe Selektivität aufweist. Als Abdichtungsmaterial wird ein Polysiloxan-Polycarbonat-Copolymer verwendet. Auch die US-A 5 702 503 offenbart eine Komposit-Membran zur Trennung von Gasgemischen, die aus einem asymmetrischen, porösen Substrat, einer ultradünnen Polymerschicht und einer dünnen Schutzschicht besteht, wobei die Schutzschicht aus einem Polydimethylsiloxan besteht.

Aus der US-A 4 767 422 ist eine Membran bekannt, die mit einem Lösungsmittel behandelt wird, das auch Additive enthalten kann. Eine so behandelte Membran soll frei von Fehlstellen sein. Die EP-A 0 748 550 offenbart eine fluorhaltige Polyamid-Membran für die Trennung von Gasgemischen, die fehlstellenfrei ist und die eine Schutzschicht aufweist, wobei die Membran durch eine bestimmte Lösungsmittelbehandlung erzeugt wird.

Der Erfindung liegt die Aufgabe zugrunde, eine Membran der eingangs genannten Art zu schaffen, die kostengünstig hergestellt werden kann, die eine hohe Trennleistung - also einen hohen Permeatfluß und eine hohe Selektivität - aufweist, die gegenüber mechanischen Beschädigungen unempfindlich ist und deren Eigenschaften sich auch während einer längeren Betriebszeit nicht nachteilig verändern, obwohl die Trennschicht und die Schutzschicht jeweils nur eine geringe Dicke haben. Der Erfindung liegt ferner die Aufgabe zugrunde, ein Verfahren zur Herstellung einer derartigen Membran bereitzustellen.

Die der Erfindung zugrundeliegende Aufgabe wird dadurch gelöst, daß die chemische Zusammensetzung der Schutzschicht von der chemischen Zusammensetzung der Trennschicht verschieden ist, daß der spezifische Permeatfluß der Schutzschicht mindestens um das 2-fache höher ist als der spezifische Permeatfluß der Trennschicht, daß die Selektivität der Schutzschicht mindestens um das 2-fache kleiner ist als die Selektivität der Trennschicht und daß die Schutzschicht aus einem Polyurethan aus einem Derivat eines Polysaccharids, aus einem Polyacrylsäurederivat, aus Polyvinylalkohol, aus einem Copolymer des Vinylalkohols mit Vinylchlorid, Ethylen, Vinylacetat und/oder einem Acrylsäurederivat, aus Polyvinylacetat und/oder aus Mischungen dieser Stoffe besteht.

Die entsprechend der Erfindung gestaltete Schutzschicht ist bezüglich ihrer chemischen Zusammensetzung sowie ihrer Struktur homogen. Sie verstopft in vorteilhafter Weise die in der Trennschicht vorhandenen Fehlstellen und bewirkt bereits dadurch eine Erhöhung der Selektivität und der Lebensdauer der Membranen. Ferner wird die Trennschicht durch die Schutzschicht vor mechanischer Beschädigung geschützt, was sich insbesondere dann positiv auswirkt, wenn eine Trennschicht mit hohem Permeatfluß relativ stark gequollen und damit durch mechanische Beanspruchung leicht verletzbar ist.

Eine geeignete Schutzschicht muß auf der Trennschicht gut haften. Ferner muß sie relativ abriebfest sein und darf nicht zur Verklebung mit anderen Gegenständen neigen. Schließlich ist erwünscht, daß die Schutzschicht einen höheren Permeatfluß und eine geringere Selektivität als die Trennschicht aufweist. Nach der Erfindung muß der spezifische Permeatfluß der Schutzschicht mindestens doppelt so hoch sein wie der spezifische Permeatfluß der Trennschicht, und die Selektivität der Schutzschicht muß mindestens um die Hälfte kleiner sein wie die Selektivität der Trennschicht. Das Material, aus dem die Schutzschicht besteht, muß in einem Lösungsmittel löslich sein. Sofern dieses Lösungsmittel in dem Stoffgemisch enthalten ist, das unter Verwendung der mit der erfindungsgemäßen Schutzschicht versehenen Membran getrennt wird, muß z.B. durch Vernetzung des Polymers dafür gesorgt werden, daß sich die Schutzschicht im Betrieb nicht auflöst. Die Auswahlkriterien für die Schutzschicht zeigen, daß die Schutzschicht lediglich die Aufgabe hat, die Fehlstellen der Trennschicht zu verschließen und die Trennschicht vor mechanischer Beanspruchung zu schützen. Die erfindungsgemäße Schutzschicht soll in keinem Fall als zweite, zusätzliche Trennschicht wirken, da dadurch der Permeatfluß nachteilig reduziert würde.

Die erfindungsgemäße Schutzschicht ermöglicht also die Schaffung einer zur Stofftrennung durch Pertraktion, Pervaporation und Permeation kondensierbarer Gase oder Dämpfe geeigneten Membran, die eine sehr dünne Trennschicht aufweist, wobei die Fehlstellen der dünnen Trennschicht, die bei den bekannten Membranen kaum vermieden werden können, durch die erfindungsgemäße Schutzschicht verschlossen sind. Hieraus folgt, daß die erfindungsgemäße Membran aufgrund der sehr geringen Schichtdicke der Trennschicht und die noch geringere Schichtdicke sowie die spezifischen Eigenschaften der Schutzschicht einen hohen Permeatfluß aufweist, und daß die hohe Selektivität der dünnen Trennschicht durch das von der Schutzschicht bewirkte Verschließen der Fehlstellen vollständig zur Wirkung kommt und auch genutzt werden kann. Bei der erfindungsgemäßen Membran liegt die Dicke der Trennschicht im Bereich von 0,1 bis 5 μm und vorzugsweise im Bereich von 0,5 bis 2 μm.

Entsprechend der Erfindung hat die Membran besonders vorteilhafte Trenneigenschaften, wenn der spezifische Permeatfluß der Schutzschicht mindestens um das 5-fache höher ist als der spezifische Permeatfluß der Trennschicht und wenn die Selektivität der Schutzschicht mindestens um das 5-fache kleiner ist als die Selektivität der Trennschicht.

Nach der Erfindung ist vorgesehen, daß das lösliche Polymer, Copolymer oder Polymergemisch aus einem Polyurethan, aus einem Derivat eines Polysaccharids, aus einem Polyacrylsäurederivat, aus Polyvinylalkohol, aus einem Copolymeren des Vinylalkohols mit Vinylchlorid, Ethylen, Vinylacetat, und/oder einem Acrylsäurederivat, aus Polyvinylacetat oder aus Mischungen dieser Stoffe besteht, wobei es sich nach der Erfindung als besonders vorteilhaft erwiesen hat, wenn als Derivat eines Polysaccharids Derivate der Cellulose oder des Chitins verwendet werden.

Polyurethane werden durch stufenweise Polyaddition von Diisocyanaten und Diolen gebildet. Polysaccharide sind makromolekulare Kohlenhydrate, deren Moleküle aus glycosidisch miteinander verknüpften Monosaccharid-Molekülen bestehen. Hierzu gehören vor allem Stärke, Cellulose und Chitin. Chitin ist ein aus Aminozuckern gebildetes Polysaccharid der allgemeinen Formel $(C_8H_{13}NO_5)_x$. Entsprechend der Erfindung hat sich zur Herstellung der Schutzschicht insbesondere das Chitinderivat Chitosan bewährt, das im Gegensatz zum Chitin löslich ist und dünne Filme bildet. Chitosan wird aus Chitin durch Behandlung mit Alkalien hergestellt. Cellulose ist ein aus Glucosemolekülen aufgebautes, kettenförmiges Polysaccharid. Als Cellulosederivate haben sich entsprechend der Erfindung zur Herstellung der Schutzschicht insbesondere Celluloseester (Celluloseacetat, Cellulosenitrat) und Celluloseether (Methylcellulose) bewährt, die sich zur Herstellung dünner Filme eignen. Polyvinylalkohol wird durch Verseifung von Polyvinylacetat hergestellt und eignet sich sowohl zur Herstellung von Trennschichten als auch zur Herstellung von Schutzschichten, wobei er in den Schutzschichten vorzugsweise in teilverseifter Form oder in Mischungen mit anderen Polymeren eingesetzt wird. Zur Herstellung der Schutzschichten eignen sich insbesondere auch Copolymere des Vinylalkohols mit Vinylchlorid, Vinylacetat einem Acrylsäurederivat und/oder Ethylen. Unter dem Begriff "Acrylsäurederivat" werden im Sinne der Erfindung die Acrylsäure, die Methacrylsäure, die Ester der Acrylsäure und die Ester der Methacrylsäure verstanden. Schließlich kann zur Herstellung der erfindungsgemäßen Schutzschicht auch Polyvinylacetat verwendet werden.

In weiterer Ausgestaltung der Erfindung ist vorgesehen, daß die Schutzschicht physikalisch, chemisch oder photochemisch vernetzt ist, wodurch die chemische und mechanische Stabilität der Schutzschicht verbessert und die Neigung der Schutzschicht zum Verkleben mit anderen Stoffen vermindert wird. Die Methoden zur physikalischen, chemischen oder photochemischen Vernetzung sind an sich bekannt, denn diese Vernetzungsmethoden werden auch bei der Herstellung von Schichten anderer Art angewendet. Beispielsweise werden Alkoholgruppen durch Einwirkung von Wärme verethert und damit physikalisch vernetzt. Bei der chemischen Vernetzung werden beispielsweise Alkoholgruppen durch Reaktion mit Diolen oder Dihalogenverbindungen verethert, durch Reaktion mit Dicarbonsäuren verestert oder durch Reaktion mit Dialdehyden acetalisiert, wodurch eine chemische Vernetzung eintritt. Bekannt ist beispielsweise auch die photochemische Vernetzung von Polyvinylalkohol unter Zusatz von Diazoniumverbindungen als Vernetzer.

Nach der Erfindung hat sich eine Membran als besonders vorteilhaft erwiesen, die als integral-asymmetrische Membran gestaltet ist, die aus einem Copolymer besteht, das mehr als 50 Gew.-% Acrylnitril enthält, und deren Schutzschicht aus Chitosan oder teilverseiftem, vernetztem Polyvinylacetat oder einem Gemisch dieser Polymere besteht und einen Durchmesser von 0,05 bis 0,5 μm hat.

Die der Erfindung zugrunde liegende Aufgabe wird ferner durch ein Verfahren zur Herstellung der erfindungsgemäßen Membran gelöst, bei dem auf eine Membran, die eine aktive Trennschicht aufweist und die als Komposit-Membran oder als integral-asymmetrische Membran gestaltet ist, eine Lösung aufgebracht wird, die 0,1 bis 1 Gew.-% eines löslichen Polymers, Copolymers oder Polymergemisches sowie ein Lösungsmittel enthält, und bei dem anschließend bei 100 bis 200°C während 5 sec bis 20 min getrocknet wird.

Durch die sehr geringe Konzentration des löslichen Polymers, Copolymers oder Polymergemisches in der Lösung ist sichergestellt, daß die beim Trocknungsvorgang erzeugte Schutzschicht lediglich eine Dicke von 0,01 bis 1 μm aufweist. Als Lösungsmittel wird entsprechend der Löslichkeit der Polymere entweder Wasser oder ein organisches Lösungsmittel oder ein Gemisch von organischen Lösungsmitteln oder ein Gemisch aus Wasser und einem organischen Lösungsmittel verwendet. Während der Trocknung bei 100-200°C verdampft das Lösungsmittel, und es bildet sich die homogene Schutzschicht. Die Trocknungstemperatur wird so gewählt, daß sie die Eigenschaften der zu beschichtenden Membran, also insbesondere die Dicke und die Beschaffenheit der Trennschicht sowie die Porosität der Stützschicht, nicht nachteilig beeinflußt. Durch die nach dem erfindungsgemäßen Verfahren erzeugte Schutzschicht wird die Trennleistung der aktiven Trennschicht, die an sich einen hohen Permeatfluß und eine durch Fehlstellen verursachte geringe Selektivität aufweist, derartig verbessert, daß die erfindungsgemäße Membran sowohl einen hohen Permeatfluß als auch eine hohe Selektivität besitzt.

In weiterer Ausgestaltung der Erfindung ist vorgesehen, daß das Aufbringen der Lösung durch Tauchen, Sprühen, Rakeln oder Walzen erfolgt und daß die Trocknung im Luftstrom erfolgt. Die Methoden zum Aufbringen der Lösung sind an sich bekannt und werden sowohl bei der Behandlung von Oberflächen als auch bei der Herstellung von Membranen verwendet. Bekannt ist auch die Trocknung im Luftstrom. Bei der Durchführung des erfindungsgemäßen Verfahrens werden in der Regel die Membranen, auf welche die Lösung durch Tauchen, Sprühen oder Rakeln aufgebracht wurde, während 1 bis 10 min. im Luftstrom getrocknet. Die Membranen, auf welche die Lösung durch Walzen aufgebracht wurde, werden in der Regel während 5 bis 60 sek. beim Walzvorgang getrocknet. Das Aufwalzen der Lösung und die gleichzeitige Trocknung sind dann besonders vorteilhaft anwendbar, wenn das Lösungsmittel leicht zu verdampfen ist und wenn das Polymer eine gute thermische Stabilität besitzt. Die Trocknung im Luftstrom verbessert die Abführung und Rückgewinnung des Lösungsmittels.

Ferner ist in weiterer Ausgestaltung der Erfindung vorgesehen, daß die Lösung ein Vernetzungsmittel in einer Konzentration von 1 bis 20 Mol-%, bezogen auf den Polymergehalt der Lösung, enthält und daß die Schutzschicht während des Trocknungsvorgangs durch eine Reaktion mit dem Vernetzungsmittel chemisch oder photochemisch vernetzt wird. Als Vernetzungsmittel werden beispielsweise handelsübliche Substanzen verwendet, die mindestens 2 reaktive Gruppen (Hydroxyl-, Aldehyd-, Carboxyl-, Amino-, Epoxy-, Diazonium-Gruppen) enthalten, wobei das Lösungsmittel gegenüber den Vernetzungsmitteln inert sein muß. Bei der photochemischen Vernetzung wird die Membran während des Trocknungsvorgangs mit Licht oder mit Licht einer bestimmten Wellenlänge bestrahlt. Sowohl die chemische als auch die photochemische Vernetzung werden durch die bei der Trocknung zugeführte Wärme beschleunigt.

Alternativ ist in weiterer Ausgestaltung der Erfindung vorgesehen, daß die Schutzschicht während des Trocknungsvorgangs oder nach dem Trocknungsvorgang physikalisch vernetzt wird. Bei der physikalischen Vernetzung reagieren einzelne Gruppen eines polymeren Makromoleküls miteinander, ohne daß ein spezieller Vernetzer zugegen ist. Beispielsweise reagieren OH-Gruppen des Polyvinylalkohols während des Trocknungsvorgangs bei erhöhter Temperatur unter Bildung von Etherbrücken. Nach dem Trocknungsvorgang wird eine physikalische Vernetzung durch Bestrahlung mit UV-, Röntgen- oder Elektronenstrahlen erreicht.

Der Gegenstand der Erfindung wird nachfolgend anhand von Ausführungsbeispielen und einem Vergleichsbeispiel näher erläutert:

**Beispiel 1**

a) **Integral-asymmetrische Membran**

Aus einen Copolymer, das aus 90 Gew.-% Acrylnitril und Rest Itaconsäureester besteht, wurde eine homogene Lösung hergestellt. Die Lösung enthielt 14 Gew.-% des Copolymers und Rest 1-Methylpyrrolidon als Lösungsmittel. Diese Lösung wurde durch Rakeln auf ein Polyestervlies aufgetragen, wobei die aufgerakelte Schicht der Lösung einen Durchmesser von 150 μm hatte. Aus der aufgerakelten Schicht wurde das Copolymer nach dem Phaseninversionsverfahren bei 12°C mit deionisiertem Wasser gefällt. Die so gebildete poröse Membran wurde 3 min. bei 140°C getrocknet und getempert. Hierbei bildete sich eine integral-asymmetrische Membran mit einer Dicke von ca. 50 μm, die auf dem als Trägerschicht dienenden Polyestervlies angeordnet war und die auf der Oberseite eine dünne, aktive Trennschicht aufwies, deren Durchmesser je nach angenommener Trenngrenze zwischen porösem und dichtem Material zwischen 0,5 und 2 μm liegt. Diese Membran wurde zur Entwässerung einer Mischung aus 90 Gew.-% Ethanol und 10 Gew.-% Wasser durch Pervaporation bei 85°C verwendet, wobei die Mischung der aktiven Trennschicht bei 3 bar als flüssige Phase aufgegeben und an der Rückseite (Permeatseite) der Membran ein Vakuum von 15 mbar angelegt wurde. Die Membran hatte folgende Leistungsdaten:

Permeatfluß = 4000g/m$^2 \cdot$h, Permeatzusammensetzung = 80 Gew.-% Ethanol und 20 Gew.-% Wasser, Selektivität $\alpha$ = 2,25.

Wird diese Membran durch weitergehende Temperung stärker verdichtet, so sinkt der Permeatfluß unter 1000g/m$^2 \cdot$h bei gleichzeitiger Erhöhung der Selektivität auf über 400. Bei Membranen, die entsprechend dem Lösungs-Diffusions-Modell arbeiten, ist der Permeatfluß in erster Näherung umgekehrt proportional zum Durchmesser der Trennschicht, während die Selektivität nur wenig mit der Schichtdicke variiert. Das Resultat der weitergehenden Temperung zeigt daher, daß zwar Fehlstellen verschlossen werden und die Selektivität dadurch steigt, daß aber gleichzeitig die Dicke der Trennschicht zunimmt und der Permeatfluß dadurch sinkt.

b) **Membran aus dem Material der Schutzschicht**

Aus 3g Chitosan, 0,03 g eines Netzmittels und 96,97 g 2%iger Essigsäure wurde eine homogene Lösung hergestellt, die auf eine Polyethylenterephthalatfolie aufgerakelt wurde. Die aufgerakelte Schicht hatte einen Durchmesser von 200 μm. Anschließend

wurde bei 140°C im Luftstrom 5 min. getrocknet. Die hierbei gebildete Chitosanschicht wurde abgelöst; sie hatte einen Durchmesser von 6 μm. Die Leistungsdaten dieser Chitosanmembran wurden entsprechend den unter 1a angegebenen Bedingungen ermittelt. Die Chitosanmembran hatte folgende Leistungsdaten:

Permeatfluß = 3000g/m$^2$.h, Permeatzusammensetzung = 60 Gew.-% Ethanol und 40 Gew.-% Wasser, Selektivität $\alpha$ = 6.

Ensprechend der Abhängigkeit des Permeatflusses vom Durchmesser der Trennschicht kann der spezifische Permeatfluß einer Chitosanmembran, die einen Durchmesser von 1 μm aufweist, näherungsweise wie folgt berechnet werden:

$$3000 \text{ g/m}^2 \cdot h \cdot 6\mu m = 18 \text{ kg.}\mu m/m^2.h$$

Die Leistungsdaten der Chitosanschicht zeigen, daß sie einen wesentlich höheren spezifischen Permeatfluß aufweist als die unter 1a beschriebene Membran, die bei vergleichbarer Schichtdicke einen Permeatfluß von 4000 g/m$^2 \cdot$ h hat. Die Leistungsdaten der Chitosanschicht zeigen ferner, daß auch ihre Selektivität geringer ist als die Selektivität der unter 1a beschriebene Membran, denn der experimentelle Wert der Selektivität der Trennschicht der Membran gemäß 1a ist durch den Einfluß von Fehlstellen verfälscht und liegt ohne den Einfluß der Fehlstellen bei über 400, was durch den Versuch zur weiteren Verdichtung der Trennschicht nachgewiesen wurde.

### c) **Erfindungsgemäße Membran**

Die unter 1a) beschriebene Membran wurde mit einer Lösung beschichtet, die 0,3 g Chitosan und 99,7 g 2%ige Essigsäure enthielt. Diese Lösung wurde auf die Membran gemäß 1a aufgerakelt, und zwar hatte die Schicht der Lösung eine Dicke von 60 μm. Anschießend wurde 3 min. bei 140°C im Luftstrom getrocknet. Die Schichtdicke der so gebildeten Schutzschicht konnte nicht direkt gemessen werden; sie kann aber aus der Konzentration des Chitosans und der Dicke der Lösungs-Schicht berechnet werden. Der Durchmesser der Schutzschicht beträgt demnach ca. 0,18 μm. Die Leistungsdaten der mit einer Schutzschicht versehenen, integral-asymmetrischen Membran, die auf einer Trägerschicht angeordnet war, wurden entsprechend den unter 1a angegebenen Bedingungen bestimmt. Die erfindungsgemäße Membran hatte folgende Leistungsdaten:

Permeatfluß = 1670 g/m$^2$.h, Permeatzusammensetzung = 96,8 Gew.-% Wasser und 3,2 Gew.-% Ethanol, Selektivität $\alpha$ = 272.

Die Leistungsdaten der erfindungsgemäßen Membran waren während 50 Betriebstagen konstant, und sie zeigen, daß die in der Trennschicht vorhandenen Fehlstellen durch die Schutzschicht verschlossen werden, da der Permeatfluß der erfindungsgemäßen Membran gegenüber dem Permeatfluß der unter 1a beschriebenen Membran zwar vermindert ist, aber die Selektivität der erfindungsgemäßen Membran gegenüber den Selektivitäten der Membranen gemäß 1a und 1b dagegen ganz erheblich gesteigert werden konnte.

Das Beispiel 1 zeigt, daß die Erfindung den Einsatz von Membranen ermöglicht, die sehr dünne Trennschichten mit einer erheblichen Anzahl an Fehlstellen aufweisen und die für sich allein eine unzureichende Trennleistung haben, die aber durch die Wirkung der erfindungsgemäßen Schutzschicht zur Trennung von Stoffgemischen im technischen Maßstab vorteilhaft eingesetzt werden können.

### **Beispiel 2**

#### a) **Integral-asymmetrische Membran**

Aus einem Copolymer, das aus 88 Gew.-% Acrylnitril und 12 Gew.-% N-Vinylpyrrolidon bestand, wurde eine homogene Lösung unter Verwendung von 1-Mythylpyrrolidon als Lösungsmittel hergestellt. Die Lösung enthielt 14 Gew.-% des Copolymers. Diese Lösung wurde auf ein Polyestervlies aufgerakelt, das als Trägerschicht diente. Der Durchmesser der aufgerakelten Schicht der Lösung betrug 150 μm. Das Copolymer wurde aus der aufgerakelten Schicht der Lösung nach dem Phaseninversionsverfahren bei 12°C mit deionisiertem Wasser ausgefällt. Anschließend wurde 3 min. bei 140°C getempert und getrocknet, wobei sich eine integral-asymmetrische Membran bildete, die eine dünne Trennschicht aufwies, deren poröse Stützschicht einen Durchmesser von ca. 60 μm hatte und die mit der aus dem Polyestervlies bestehenden Trägerschicht fest verbunden war, wobei der Durchmesser der Trennschicht je nach angenommener Trenngrenze zwischen porösem und dichtem Material zwischen 0,5 und 2 μm liegt. Die Leistungsdaten dieser Membran wurden entsprechend den unter 1a angegebenen Bedingungen ermittelt. Die Membran hatte folgende Leistungsdaten:

Permeatfluß = 7700 g/m$^2$.h, Permeatzusammensetzung = 25 Gew.-% Wasser und 75 Gew.-% Ethanol, Selektivität $\alpha$ = 3.

Wird diese Membran durch weitergehende Temperung stärker verdichtet, so sinkt der Permeatfluß auf einen Wert von 800 g/m$^2 \cdot$ h, wobei gleichzeitig die Selektivität auf einen Wert von 200 ansteigt. Diese Ergebnisse zeigen, daß die Leistungseigenschaften der Membran durch eine erhebliche Anzahl an Fehlstellen in der Trennschicht beeinflußt werden.

b) **Membran aus dem Material der Schutzschicht**

Aus 3 g eines teilverseiften Polyvinylacetats, 0,3 g Glutardialdehyd (Vernetzer), 0,03 g eines Netzmittels und 96,67 g 2%iger Essigsäure wurde eine homogene Lösung hergestellt. Diese Lösung wurde auf eine Polyethylenterephthalatfolie aufgerakelt, wobei sich eine Schicht bildete, die einen Durchmesser von 200 μm hatte. Anschließend wurde 5 Minuten bei 140°C im Luftstrom getrocknet. Der gebildete Film aus vernetztem, teilverseiftem Polyvinylacetat wurde danach von der Polyethylenterephthalatfolie abgelöst; er hatte einen Durchmesser von ca. 7 μm. Die Leistungsdaten der aus vernetztem, teilverseiftem Polyvinylacetat bestehenden Membran wurden gemäß den unter 1a angegebenen Bedingungen ermittelt, wobei sich folgende Werte ergaben:

Permeatfluß = 25 kg/$m^2$.h, Permeatzusammensetzung = 20 Gew.-% Wasser und 80 Gew.-% Ethanol, Selektivität $\alpha$ = 2,25.

Bei Umrechnung des Permeatflusses auf einen Membrandurchmesser von 1 μm ergibt sich ein spezifischer Permeatfluß von 175 kg/$m^2$.h.

c) **Erfindungsgemäße Membran**

Auf die gemäß 2a hergestellte, auf einer Trägerschicht angeordnete integral-asymmetrische Membran wurde eine Lösung aufgerakelt, die 0,3 g eines teilverseiften Polyvinylacetats, 0,03 g Glutardialdehyd (Vernetzer) 0,003 g eines Netzmittels und Rest 2%iger Essigsäure enthielt. Die aufgerakelte Schicht der Lösung hatte einen Durchmesser von 30 μm. Anschließend wurde 3 min. bei 140°C im Luftstrom getrocknet. Der Durchmesser der auf diese Weise erzeugten Schutzschicht betrug ca. 0,1 μm, wobei dieser Wert nicht gemessen, sondern berechnet wurde. Die Leistungsdaten der erfindungsgemäßen Membran wurden gemäß den unter 1a angegebenen Bedingungen ermittelt, wobei sich folgende Werte ergaben:

Permeatfluß = 2400 g/$m^2$.h, Permeatzusammensetzung = 91 Gew.-% Wasser und 9 Gew.-% Ethanol, Selektivität $\alpha$ = 91.

Die Leistungsdaten der erfindungsgemäßen Membran waren währen 50 Betriebstagen konstant. Die Leistungsdaten zeigen, daß die sehr dünne Schutzschicht die Fehlstellen in der Trennschicht der integral-asymmetrischen Membran gemäß 2a verschließt, da der Permeatfluß der erfindungsgemäßen Membran geringer ist als der Permeatfluß der unter 2a beschriebenen Membran und da die Selektivität der erfindungsgemäßen Membran wesentlich höher ist als die Selektivitäten der Membranen gemäß 2a und 2b.

**Beispiel 3**

a) **Integral-asymmetrische Membran**

Eine kommerziell verfügbare, poröse Ultrafiltrationsmembran, die aus einem Copolymer auf der Basis von Acrylnitril besteht, wurde mit destilliertem Wasser gewaschen und im nassen Zustand 3 min. bei 140°C getrocknet und getempert. Es bildete sich eine integralasymmetrische Membran mit einer aktiven Trennschicht, deren Durchmesser je nach angenommener Trenngrenze zwischen porösem und dichtem Material zwischen 0,5 und 2 μm liegt. Die Leistungsdaten dieser Membran wurden entsprechend den unter 1a angegebenen Bedingungen ermittelt, wobei sich folgende Werte ergaben:

Permeatfluß = 2450 g/$m^2 \cdot$ h, Permeatzusammensetzung = 74 Gew.-% Wasser und 26 Gew.-% Ethanol, Selektivität $\alpha$ = 25,6.

b) **Membran aus dem Material der Schutzschicht**

Aus einer Lösung, die 4,2 g eines teilverseiften Polyvinylacetats, 1,8 g Chitosan, 0,3 g eines Melamin-Formaldehyd-Harzes (Vernetzer) und 93,7 g 2%ige Essigsäure enthielt, wurde durch Vergießen auf einer Unterlage und anschließende Trocknung während 5 min. bei 140°C im Luftstrom eine Membran hergestellt, die einen Durchmesser von 12 μm hatte. Die Leistungsdaten dieser Membran wurden entsprechend den unter 1a angegebenen Bedingungen ermittelt, wobei sich folgende Werte ergaben:

Permeatfluß = 2600 g/$m^2 \cdot$ h, Permeatzusammensetzung = 60 Gew.-% Wasser und 40 Gew.-% Ethanol, Selektivität $\alpha$ = 13,5.

Bei Umrechnung des Permeatflusses auf einen Membrandurchmesser von 1 μm ergibt sich ein spezifischer Permeatfluß von 31,2 kg/$m^2 \cdot$ h.

c) **Erfindungsgemäße Membran**

Auf die integral-asymmetrische Membran gemäß 3a wurde eine Lösung aufgerakelt, die durch Verdünnen der Lösung gemäß 3b mit 2 %iger Essigsäure im Verhältnis 1:10 hergestellt worden war. Die aufgerakelte Schicht der Lösung hatte einen Durchmesser von 60 μm. Die aufgerakelte Schicht der Lösung wurde anschließend 3 min bei 140°C im Luftstrom getrocknet. Dabei bildete sich eine Schutzschicht deren Durchmesser ca. 0,38 μm betrug (berechneter Wert). Die Leistungsdaten der erfindungsgemäßen Membran wurden entsprechend den unter 1a angegebenen Bedingungen ermittelt, wobei sich folgende Werte ergaben:

Permeatfluß = 1620 g/m$^2 \cdot$ h, Permeatzusammensetztung = 99,2 Gew.-% Wasser und 0,8 Gew.-% Ethanol, Selektivität $\alpha$ = 1116.

Die Leistungsdaten der erfindungsgemäßen Membran waren während 50 Betriebstagen konstant. Aufgrund der vorteilhaften Wirkungen der Schutzschicht besitzt die erfindungsgemäße Membran eine außerordentlich hohe Selektivität und einen auch für die technische Anwendung ausreichend hohen Permeatfluß.

**Vergleichsbeispiel**

Nachfolgend werden Versuche beschrieben, mit denen nachgewiesen wird, daß die erfindungsgemäße Schutzschicht nicht als aktive Trennschicht wirkt.

a) **Membran mit den Eigenschaften einer Stützschicht**

Eine poröse Ultrafiltrationsmembran gemäß Beispiel 3a wurde gewaschen und lediglich bei Raumtemperatur getrocknet. Die Leistungsdaten dieser Membran wurden entsprechend den im Beispiel 1a angegebenen Bedingungen ermittelt, wobei folgende Werte gefunden wurden:

Permeatfluß = 25 kg/m$^2 \cdot$ h, Permeatzusammensetzung = 10 Gew.-% Wasser und 90 Gew.-% Ethanol, Selektivität $\alpha$ = 1.

Diese Membran hat die typischen Eigenschaften der zur Herstellung von Komposit-Membranen verwendeten porösen Stützschichten, da sie keine aktive Trennschicht aufweist. Sie besitzt zwar einen durch die Poren verursachten hohen Permeatfluß aber keine Selektivität.

b) **Aufbringen einer Schutzschicht**

Auf die poröse Ultrafiltrationsmembran gemäß 4a wurde eine Schutzschicht entsprechend dem Beispiel 3c aufgebracht. Die Leistungsdaten dieser Membran wurden entsprechend den im Beispiel 1a angegebenen Bedingungen ermittelt, wobei folgende Werte gefunden wurden:

Permeatfluß = 8 kg/m$^2 \cdot$ h, Permeatzusammensetzung = 13 Gew.-% Wasser und 87 Gew.-% Ethanol, Selektivität $\alpha$ = 1,3.

Wie zu erwarten war, resultierte bei diesem Versuch keine brauchbare Membran zur Stofftrennung, da die Lösung, aus der die Schutzschicht gebildet wurde, in die Poren der Ultrafiltrationsmembran eingedrungen war und da die sehr dünne Schutzschicht diese Poren nur unzureichend verschließen konnte.

Dieser Versuch zeigt, daß es nicht möglich ist, die auf einer porösen Membran befindliche Schutzschicht als aktive Trennschicht bei der Trennung von Stoffgemischen durch Pertraktion, Pervaporation, Permeation kondensierbarer Gase und Dampfpermeation einzusetzen.

c) **Aufbringen einer homogenen „Trennschicht"**,

die aus dem Material der Schutzschicht besteht

Auf die poröse Ultrafiltrationsmembran gemäß 4a wurde die im Beispiel 3b beschriebene Lösung aufgebracht, und es wurde entsprechend den im Beispiel 3b genannten Bedingungen eine Schicht mit einer Dicke von 3 µm erzeugt. Für die so hergestellte beschichtete Membran wurden die Leistungsdaten entsprechend den im Beispiel 1a angegebenen Bedingungen ermittelt, wobei folgende Werte gefunden wurden:

Permeatfluß = 3000 g/m$^2 \cdot$ h, Permeatzusammensetzung = 75 Gew.-% Wasser und 25 Gew.-% Ethanol, Selektivität $\alpha$ = 27.

Wie zu erwarten war, resultierte bei diesem Versuch eine Komposit-Membran mit unbefriedigenden Leistungsdaten, da die aus dem Material der Schutzschicht bestehende „Trennschicht" keine ausreichende Selektivität besitzt. Dieser Versuch zeigt also, daß es nicht möglich ist, eine aktive Trennschicht aus dem Material herzustellen, das sich für die Herstellung der erfindungsgemäßen Schutzschicht eignet, denn das Material der Schutzschicht ist wegen der zu geringen Selektivität für die Herstellung von Trennschichten nicht geeignet.

d) **Aufbringen einer Schutzschicht auf die Komposit-Membran**

gemäß 4c

Auf die entsprechend 4c hergestellte Komposit-Membran wurde gemäß dem Beispiel 3c eine erfindungsgemäße Schutzschicht aufgebracht. Die Leistungsdaten dieser Membran wurden entsprechend den im Beispiel 1a angegebenen Bedingungen ermittelt, wobei ein Permeatfluß von 2700 g/m$^2 \cdot$ h und eine Selektivität $\alpha$ von 25 gefunden wurden. Innerhalb der üblichen Toleranzen sind die Leistungsdaten durch die Schutzschicht unverändert geblieben. Dies resultiert aus der Tatsache, daß schon das Material der „Trennschicht" an sich eine ungenügende Selektivität aufweist und daß die Trennschicht kaum Fehlstellen besitzt.

Die zum Vergleichsbeispiel gehörenden Versuche lassen erkennen, daß die erfindungsgemäße Schutzschicht nicht als Trennschicht wirkt, daß das Material der Schutzschicht wegen seiner mangelnden Selektivität nicht zur Herstellung von aktiven Trennschichten geeignet ist und daß die erfindungsgemäße Schutzschicht lediglich auf einer dünnen aktiven Trennschicht mit Fehlstellen, nicht aber auf einer porösen Stützschicht oder einer praktisch fehlstellenfreien Trennschicht aus einem Polymer mit ungenügender Selektivität ihre vorteilhaften Wirkungen entfaltet.

**Patentansprüche**

1. Membran zur Trennung von Stoffgemischen durch Pertraktion, Pervaporation, Permeation kondensierbarer Gase oder Dampfpermeation, die eine aktive Trennschicht aufweist, die als Komposit-Membran oder als integral-asymmetrische Membran gestaltet ist und die auf der dünnen, mit einer hohen Zahl von Fehlstellen behafteten Trennschicht eine homogene Schutzschicht trägt, welche einen Durchmesser von 0,01 bis 1 µm hat und aus einem löslichen Polymer, Copolymer oder Polymergemisch besteht, dadurch gekennzeichnet, daß die chemische Zusammensetzung der Schutzschicht von der chemischen Zusammensetzung der Trennschicht verschieden ist, daß der spezifische Permeatfluß der Schutzschicht mindestens um das 2-fache höher ist als der spezifische Permeatfluß der Trennschicht, daß die Selektivität der Schutzschicht mindestens um das 2-fache kleiner ist als die Selektivität der Trennschicht und daß die Schutzschicht aus einem Polyurethan, aus einem Derivat eines Polysaccharids, aus einem Polyacrylsäureester, aus Polyvinylalkohol, aus einem Copolymer des Vinylalkohols mit Vinylchlorid, Ethylen, Vinylacetat und/oder einem Acrylsäurederivat, aus Polyvinalacetat und/oder aus Mischungen dieser Stoffe besteht.

2. Membran nach Anspruch 1, dadurch gekennzeichnet, daß der spezifische Permeatfluß der Schutzschicht mindestens um das 5-fache höher ist als der spezifische Permeatfluß der Trennschicht und daß die Selektivität der Schutzschicht mindestens um das 5-fache kleiner ist als die Selektivität der Trennschicht.

3. Membran nach den Ansprüchen 1 oder 2, dadurch gekennzeichnet, daß als Derivat eines Polysaccharids Derivate der Cellulose oder des Chitins verwendet werden.

4. Membran nach den Ansprüchen 1 bis 3, dadurch gekennzeichnt, daß die Schutzschicht physikalisch, chemisch oder photochemisch vernetzt ist.

5. Membran nach einem der Ansprüche 1 bis 4, dadurch gekennzeichnet, daß sie als integral-asymmetrische Membran gestaltet ist, daß sie aus einem Copolymer besteht, welches mehr als 50 Gew.-% Acrylnitril enthält und daß deren Schutzschicht aus Chitosan oder teilverseiftem, vernetztem Polyvinylacetet oder einem Gemisch dieser Polymere besteht und einen Durchmesser von 0,05 bis 0,5 µm hat.

6. Verfahren zur Herstellung der Membran nach einem oder mehreren der Ansprüche 1 bis 5, dadurch gekennzeichnet, daß auf eine Membran, die eine aktive Trennschicht aufweist und die als Komposit-Membran oder als integral-asymmetrische Membran gestaltet ist, eine Lösung aufgebracht wird, die 0,1 bis 1 Gew.-% eines löslichen Polymers, Copolymers oder Polymergemisches sowie ein Lösungsmittel enthält, und daß anschließend bei 100 bis 200°C während 5 sec bis 20 min getrocknet wird.

7. Verfahren nach Anspruch 6, dadurch gekennzeichnet, daß das Aufbringen der Lösung durch Tauchen, Sprühen, Rakeln oder Walzen erfolgt.

8. Verfahren nach den Ansprüchen 6 bis 7, dadurch gekennzeichnet, daß die Trocknung im Luftstrom erfolgt.

9. Verfahren nach den Ansprüchen 6 bis 8, dadurch gekennzeichnet, daß die Lösung ein Vernetzungsmittel in einer Konzentration von 1 bis 20 Mol-%, bezogen auf den Polymergehalt der Lösung, enthält und daß die Schutzschicht während des Trocknungsvorgangs durch eine Reaktion mit dem Vernetzungsmittel chemisch oder photochemisch vernetzt wird.

10. Verfahren nach den Ansprüchen 6 bis 9, dadurch gekennzeichnet, daß die Schutzschicht während oder nach der Trocknung physikalisch vernetzt wird.

| Europäisches Patentamt | EUROPÄISCHER RECHERCHENBERICHT | Nummer der Anmeldung EP 99 11 5473 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 3 980 456 A (BROWALL WARELLA R) 14. September 1976 (1976-09-14) * Zusammenfassung; Anspruch 1 * * Spalte 1, Zeile 39 - Zeile 53 * * Spalte 2, Zeile 24 - Zeile 37 * * Spalte 3, Zeile 65 - Spalte 4, Zeile 39 * * Spalte 6, Zeile 12 - Zeile 22 * | 1 | B01D69/12 B01D67/00 |
| X | US 4 230 463 A (HENIS JAY M S ET AL) 28. Oktober 1980 (1980-10-28) * Zusammenfassung * * Spalte 6, Zeile 31 - Zeile 40 * * Spalte 8, Zeile 20 - Spalte 9, Zeile 27 * * Spalte 11, Zeile 53 - Spalte 12, Zeile 31 * * Spalte 13, Zeile 20 - Zeile 24 * * Spalte 18, Zeile 3 - Zeile 22 * * Spalte 19, Zeile 1 - Zeile 13 * * Spalte 19, Zeile 43 - Spalte 20, Zeile 66 * * Beispiele 1-3,23; Tabelle I * | 1,2,4, 6-9 | |
| A | MULDER M.: "Basic Principles of MembraneTechnology" 1990 , KLUWER , DORDRECHT, NL XP002095868 * Seite 229, letzter Absatz - Seite 232, Zeile 7 * * Seite 234, letzte Zeile - Seite 235, Zeile 1 * | 1 | RECHERCHIERTE SACHGEBIETE (Int.Cl.7) B01D |

-/--

Der vorliegende Recherchenbericht wurde für alle Patentansprüche erstellt

| Recherchenort | Abschlußdatum der Recherche | Prüfer |
|---|---|---|
| DEN HAAG | 23. November 1999 | Hoornaert, P |

**Europäisches Patentamt**

## EUROPÄISCHER RECHERCHENBERICHT

Nummer der Anmeldung

EP 99 11 5473

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 012, no. 209 (C-504), 15. Juni 1988 (1988-06-15) & JP 63 007806 A (AGENCY OF IND SCIENCE & TECHNOL), 13. Januar 1988 (1988-01-13) * Zusammenfassung * -& DATABASE WPI Section Ch, Week 8808 Derwent Publications Ltd., London, GB; Class A88, AN 88-052586 XP002095869 * Zusammenfassung * | 1,3,4,6, 7,9 | |
| A | EP 0 719 581 A (PRAXAIR TECHNOLOGY INC) 3. Juli 1996 (1996-07-03) * Zusammenfassung; Ansprüche 1,10,11 * * Spalte 3, Zeile 29 – Spalte 4, Zeile 2 * * Spalte 6, Zeile 45 – Spalte 7, Zeile 1 * * Spalte 9, Zeile 13 – Zeile 57 * | 1,2,4,6, 8,10 | |
| A | US 5 702 503 A (TSE TANG MAN-WING) 30. Dezember 1997 (1997-12-30) * Zusammenfassung; Abbildung 1 * * Spalte 3, Zeile 63 – Spalte 4, Zeile 2 * * Spalte 11, Zeile 60 – Spalte 12, Zeile 44 * * Spalte 15, Zeile 7 – Zeile 8 * * Spalte 19, Zeile 46 – Spalte 20, Zeile 48 * | 1,4,6-10 | **RECHERCHIERTE SACHGEBIETE (Int.Cl.7)** |

-/--

Der vorliegende Recherchenbericht wurde für alle Patentansprüche erstellt

| Recherchenort | Abschlußdatum der Recherche | Prüfer |
|---|---|---|
| DEN HAAG | 23. November 1999 | Hoornaert, P |

EPO FORM 1503 03.82 (P04C03)

**Europäisches Patentamt**

# EUROPÄISCHER RECHERCHENBERICHT

Nummer der Anmeldung

EP 99 11 5473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 767 422 A (BIKSON BENJAMIN ET AL) 30. August 1988 (1988-08-30) <br> * Zusammenfassung * <br> * Spalte 1, Zeile 61 - Spalte 2, Zeile 11 * <br> * Spalte 2, Zeile 39 - Zeile 41 * <br> * Spalte 3, Zeile 25 - Zeile 44 * <br> * Spalte 4, Zeile 15 - Zeile 54 * <br> * Spalte 6, Zeile 2 - Zeile 20 * <br> * Spalte 8, Zeile 37 - Zeile 56 * <br> * Beispiele 3,4,6 * | 1,4,6-10 | |
| A | EP 0 748 650 A (NITTO DENKO CORP) 18. Dezember 1996 (1996-12-18) <br> * Zusammenfassung * <br> * Seite 2, Zeile 10 * <br> * Seite 7, Zeile 46 - Zeile 49 * <br> * Seite 8, Zeile 11 * <br> * Seite 13, Zeile 16 - Zeile 31 * <br> * Seite 14, Zeile 13 - Zeile 16 * <br> * Seite 15, Zeile 34 - Zeile 37 * <br> * Seite 17, Zeile 39 - Zeile 40 * | 1,3,4, 6-10 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 23. November 1999 | Hoornaert, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie,übereinstimmendes Dokument

**ANHANG ZUM EUROPÄISCHEN RECHERCHENBERICHT**
**ÜBER DIE EUROPÄISCHE PATENTANMELDUNG NR.** EP 99 11 5473

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-1999

| Im Recherchenbericht angeführtes Patentdokument | Datum der Veröffentlichung | Mitglied(er) der Patentfamilie | Datum der Veröffentlichung |
|---|---|---|---|
| US 3980456 A | 14-09-1976 | DE 2613248 A | 14-10-1976 |
| | | FR 2306003 A | 29-10-1976 |
| | | GB 1536432 A | 20-12-1978 |
| | | IT 1058571 B | 10-05-1982 |
| | | JP 51121485 A | 23-10-1976 |
| | | JP 59035643 B | 30-08-1984 |
| | | JP 59196708 A | 08-11-1984 |
| | | NL 7603316 A | 04-10-1976 |
| | | SE 435235 B | 17-09-1984 |
| | | SE 7602846 A | 01-10-1976 |
| US 4230463 A | 28-10-1980 | AR 224102 A | 30-10-1981 |
| | | AT 374375 B | 10-04-1984 |
| | | AT 812477 A | 15-09-1983 |
| | | AU 504016 B | 27-09-1979 |
| | | AU 3060777 A | 24-05-1979 |
| | | BE 860811 A | 16-05-1978 |
| | | BR 7707583 A | 22-08-1978 |
| | | CA 1107203 A | 18-08-1981 |
| | | CS 257751 B | 15-06-1988 |
| | | DD 133298 A | 27-12-1978 |
| | | DE 2750874 A | 18-05-1978 |
| | | DK 503277 A,B, | 16-05-1978 |
| | | EG 13082 A | 31-10-1980 |
| | | ES 464048 A | 01-08-1978 |
| | | ES 466474 A | 01-06-1979 |
| | | ES 475666 A | 16-05-1979 |
| | | FI 773439 A,B, | 16-05-1978 |
| | | FR 2410501 A | 29-06-1979 |
| | | GB 1590813 A | 10-06-1981 |
| | | GR 65610 A | 14-10-1980 |
| | | IL 53379 A | 30-05-1980 |
| | | IT 1089058 B | 10-06-1985 |
| | | JP 1474079 C | 27-12-1988 |
| | | JP 53086684 A | 31-07-1978 |
| | | JP 59051321 B | 13-12-1984 |
| | | MX 172537 B | 17-12-1993 |
| | | MX 148173 A | 24-03-1983 |
| | | NL 7712432 A,B, | 17-05-1978 |
| | | NO 773882 A | 18-05-1978 |
| | | PH 14682 A | 10-11-1981 |
| | | PT 67269 A,B | 01-12-1977 |
| | | RO 76391 A | 30-05-1981 |
| | | SE 440744 B | 19-08-1985 |
| | | SE 7712818 A | 16-05-1978 |
| | | TR 19886 A | 09-04-1980 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**   EP 99 11 5473

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-1999

| Im Recherchenbericht angeführtes Patentdokument | Datum der Veröffentlichung | Mitglied(er) der Patentfamilie | Datum der Veröffentlichung |
|---|---|---|---|
| US 4230463 A | | YU 272277 A | 31-10-1982 |
| JP 63007806 A | 13-01-1988 | JP 1838369 C | 25-04-1994 |
| | | JP 5059777 B | 31-08-1993 |
| EP 0719581 A | 03-07-1996 | BR 9506093 A | 23-12-1997 |
| | | CN 1130543 A | 11-09-1996 |
| | | JP 8229358 A | 10-09-1996 |
| US 5702503 A | 30-12-1997 | DE 69410264 D | 18-06-1998 |
| | | DE 69410264 T | 10-09-1998 |
| | | EP 0703819 A | 03-04-1996 |
| | | JP 9501865 T | 25-02-1997 |
| US 4767422 A | 30-08-1988 | IN 172370 A | 03-07-1993 |
| | | AT 59574 T | 15-01-1991 |
| | | CA 1299449 A | 28-04-1992 |
| | | CN 1012879 B | 19-06-1991 |
| | | EP 0286090 A | 12-10-1988 |
| | | GR 3001385 T | 11-09-1993 |
| | | JP 6079657 B | 12-10-1994 |
| | | JP 63294908 A | 01-12-1988 |
| | | MX 165967 B | 07-12-1992 |
| EP 0748650 A | 18-12-1996 | JP 9000896 A | 07-01-1997 |
| | | JP 9000898 A | 07-01-1997 |
| | | JP 9000897 A | 07-01-1997 |
| | | US 5817165 A | 06-10-1998 |

Für nähere Einzelheiten zu diesem Anhang : siehe Amtsblatt des Europäischen Patentamts, Nr.12/82